(19) Europäisches Patentamt
European Patent Office
Office européen des brevets

(11) **EP 2 749 761 B1**

(12) **EUROPÄISCHE PATENTSCHRIFT**

(45) Veröffentlichungstag und Bekanntmachung des Hinweises auf die Patenterteilung:
**08.03.2017** Patentblatt **2017/10**

(51) Int Cl.:
*F02B 37/18* (2006.01)    *F16K 1/20* (2006.01)
*F02M 26/69* (2016.01)

(21) Anmeldenummer: **13195618.7**

(22) Anmeldetag: **04.12.2013**

(54) **Fluidleitung einer Brennkraftmaschine mit einem Ventil zum Einstellen eines Fluidmassenstromes und Brennkraftmaschine**

Fluid line of a combustion engine with a valve for adjusting a fluid mass flow and combustion engine

Conduite de fluide d'un moteur à combustion interne avec soupape pour le réglage d'un débit massique de fluide et moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2012 DE 102012025367**

(43) Veröffentlichungstag der Anmeldung:
**02.07.2014** Patentblatt **2014/27**

(73) Patentinhaber:
• **Volkswagen Aktiengesellschaft**
  **38440 Wolfsburg (DE)**
• **AUDI AG**
  **85045 Ingolstadt (DE)**

(72) Erfinder:
• **Osmialowski, Stephan**
  **38124 Braunschweig (DE)**
• **Schäfer, Bernd**
  **85110 Kipfenberg (DE)**
• **Weber, Andreas**
  **85055 Ingolstadt (DE)**
• **Firuta, Aleksander**
  **59-305 Rudna (PL)**
• **Harai, Lajos**
  **9029 Györ (HU)**
• **Häring, Marco**
  **74211 Leingarten (DE)**

(56) Entgegenhaltungen:
WO-A1-2007/002520      DE-B- 1 264 190
US-A1- 2003 075 159

**Beschreibung**

Die Erfindung betrifft eine Fluidleitung einer Brennkraftmaschine gemäß dem Oberbegriff des Patentanspruchs 1. Des Weiteren betrifft die Erfindung eine Brennkraftmaschine gemäß dem Oberbegriff des Patentanspruchs 10.

Zur Ladedruckregelung an einem Turbolader mit Turbinenrad von Verbrennungsmotoren werden üblicherweise Wastegate-Systeme eingesetzt. Diese führen Teile des Abgasstroms über einen Bypasskanal am Turbinenrad des Turboladers vorbei. Je größer der über den Bypasskanal am Turbinenrad vorbeigeführte Abgasstrom ist, desto weniger kinetische Energie wird vom Abgasstrom auf das Turbinenrad und somit auch auf ein mit dem Turbinenrad fest über eine Welle gekoppeltes Verdichterrad übertragen. Die Ladeluft wird somit weniger verdichtet, wodurch sich ein entsprechend geringerer Ladedruck einstellt.

Durch Freigabe eines definierten Strömungsquerschnitts des Bypasskanals lässt sich der Abgasstrom im Bypasskanal und somit der Ladedruck einstellen. Die Einstellung eines definierten Strömungsquerschnitts erfolgt dabei über ein Ventil, das sogenannte Wastegate-Ventil. Für dieses Wastegate-Ventil gibt es verschiedene Umsetzungskonzepte.

Die in einem Gehäuse des Turboladers von Ottomotoren am Wastegate-Ventil vor dem Eintritt in einen Turbinenraum herrschenden hohen Temperaturen von bis zu etwa 980°C machen es erforderlich, dass Antrieb und Regelung eines Verstellmechanismus des Wastegate-Ventils außerhalb des Gehäuses angeordnet werden. Zum Hindurchführen der mechanischen Ventilbetätigung durch eine Gehäusewand des Abgasturboladers wird in der Regel eine Welle aus hochwarmfestem Stahl eingesetzt, die in einer in die Gehäusewand eingepressten Buchse aus hoch legiertem Stahl gelagert wird. Wegen der hier herrschenden ebenfalls hohen Temperaturen ist der Einsatz von Schmierstoffen für die Lagerung nicht möglich. Es handelt sich somit um eine "trockene" Lagerung von Stahl auf Stahl. Weiter steht dieses ausschließlich auf Kontaktreibung basierende tribologische System im Spannungsfeld der Forderung möglichst geringen Spiels seiner Reibpartner zur Sicherstellung der Gasdichtigkeit des Turboladergehäuses nach außen und der Vermeidung des Verklemmens bei temperaturbedingter Bauteildehnung von Betätigungswelle, Buchse und Gehäuse aufgrund zu kleinen Spiels.

Auf einem Abdichtelement des Bypassventils lasten im Motorbetrieb Abgasdrücke, die neben einem näherungsweise statischen Staudruck aus dem Abgasmassenstrom Druckspitzen aufweisen, die mit einem ganzzahligen Vielfachen der Motordrehzahlfrequenz pulsieren. Für Vierzylindermotoren weist vor allem die Abgaspulsation in der zweiten Motorordnung einen hohen Energieinhalt auf. Diese Lasten müssen über die einzelnen. Bauteile des Verstellmechanismus in ihren Lagerstellen und von dem Antrieb durch einen Elektromotor mit Getriebe oder einen pneumatischen Aktor abgestützt werden. Bei geschlossenem Ventil können die an dem oder den Abdichtelementen angreifenden Abgasdruckkräfte durch eine ausreichend große Zuhaltekraft des Wastegate-Ventilstellsystems kompensiert werden. Dabei bleibt das Verstellsystem in Ruhe und daher verschleißfrei.

Wenn der Bypasskanal geöffnet wird, kann der Antrieb des Systems die Drucklasten aus zwei Gründen nicht mehr ausreichend neutralisieren und es kommt zu oszillatorischen Bewegungen der Bauteile des Stellsystems:

1. Aus konstruktiven Gründen notwendige Spiele zwischen Bauteilen des Betätigungssystems werden aufgrund der wechselnden Abgasdruckanregungen mit höherer Frequenz in kurzer Zeit mehrfach durchwandert. Die daraus resultierenden Anlagewechsel führen zu einer Vielzahl von Mikrobewegungen in den belasteten Lagersteilen des Wastegate-Ventilstellsystems und sind mögliche Ursache für Verschleiß an diesen Stellen. Hiervon sind besonders die Verbindungen Ventilteller/Spindel, Welle/Buchse und Linkplate/Kolbenstange betroffen. Während die Bauteilkontakte von Ventilteller/Spindel und Linkplate/Kolbenstange durch konstruktive Maßnahmen soweit ertüchtigt werden können, dass der sich einstellende Verschleiß innerhalb zulässiger Grenzen bleibt, stellt die ausfallsichere Gestaltung der Welle/Buchse-Lagerung hinsichtlich Verschleiß eine besondere Herausforderung dar. Zwischen Antrieb und Ventil muss durch die Welle zum einen ein niederfrequentes Stell- oder ein höherfrequentes Abstützmoment um die Wellenlängsachse übertragen werden und zum zweiten ein dazu senkrechtes Moment in der Lagerung abgestützt werden. Das Abstützmoment führt in der Buchse zu endständigen Reaktionskräften der Welle in gegenüberliegenden Anlagestellen. Durch diese und die gleichzeitig auftretenden rotatorischen Mikroschwingungen der Welle in der Buchse tritt hier abrasiver und in der Folge auch möglicher adhäsiver Verschleiß auf.

2. Diese höherfrequenten Bewegungen der kraftübertragenden Stellelemente können weder durch einen elektrischen noch pneumatischen Antrieb beseitigt werden. Die Ausregelung der höherfrequenten Störschwingungen durch Einstellen hierfür erforderlicher Stellkräfte ist bisher noch nicht gelungen. Die Bauteile des Wastegate-Ventilstellsystems antworten daher auf die vorhandenen Abgasdruckpulse mit erzwungenen höherfrequenten Schwingungen.

Die beschriebenen Reibbewegungen lastübertragender Bauteile bei geöffnetem Ventil können im Wesentlichen drei bauteilschädigende Auswirkungen haben:

1. Abrasiver und in der Folge möglicher adhäsiver Verschleiß zwischen Betätigungswelle und Gehäusebuchse führt zu unerwünschten Oberflächen-, Geometrie- und Lastangriffspunktveränderungen der beiden Bauteile. Als Konsequenz kann der Verstellmechanismus an dieser Stelle verklemmen oder bei Überschreiten einer zulässigen Verschleißgrenze ein vollständig gasdichtes Verschließen der Bypasskanal-Öffnung durch den Ventilteller nicht mehr zuverlässig gewährleisten. Beides führt zum Versagen der Ladedruckregelung des Abgasturboladers und damit zu seinem Ausfall. Massiver Verschleiß zwischen Welle und Buchse kann außerdem bis zur Undichtigkeit des Turboladergehäuses ausufern.

2. Bei kleinen Bypassventil-Öffnungswinkeln besteht die Möglichkeit, dass durch das Flattern des Ventiltellers im Abgasstrom dieser gegen seinen Ventilsitz aufschlägt. Dieses als "Prasseln" bekannte Aufschlagen kann mit einer Zertrümmerung des Ventilsitzes und/oder des Ventils enden und die Bauteile nachhaltig schädigen. Die Dichtigkeit des Ventils ist dann nicht mehr gegeben und bei der resultierenden unzureichenden Ladedruckregelung fällt die Maximalleistung des Motors merklich ab. Die durch das Prasseln verursachten Aufschlagimpulse haben sich darüber hinaus in einigen Anwendungen als Körperschallimpulse akustisch negativ bemerkbar gemacht.

3. Das für herkömmliche Wastegate-Ventilverstellsysteme aufgrund unterschiedlicher Bauteildehnungen bei Temperaturschwankungen von bis zu 1040°C erforderliche Spiel begünstigt durch Abgasdruckpulsationen angeregte Vibrationen des Ventiltellers auf seinem Befestigungselement. Dieses oftmals auch als "Schnarren" oder "Ventilschnarren" bezeichnete Verhalten kann zum Versagen der Ventilbefestigung führen. Der Ventilteller fällt ab oder das Ventil schließt nicht mehr richtig (mit den unter 2. beschriebenen Folgen). Ebenso besteht die Möglichkeit, dass der Motor durch das Ventilschnarren akustisch auffällig wird.

Das Fehlen einer Kompensation der Abgasdrucklasten durch eine geeignete Gegenlast kann zu den unter 1., 2. und 3. beschriebenen Bauteilausfällen bei geöffnetem Bypassventil führen. Die Schädigungen gemäß 3. sind mittels konstruktiver Maßnahmen, wie beispielsweise des Einsatzes einer Spielausgleichsfeder, vermeidbar.

Aus der DE 103 47 442 A1 ist eine Vorrichtung zur Regelung des Ladedruckes einer Brennkraftmaschine mit Abgasturbolader, insbesondere für Kraftfahrzeuge, bekannt mit einer die Abgasturbine umgehenden Bypassleitung, die über ein Bypassventil steuerbar ist, wobei das Bypassventil mit einem druckbeaufschlagten Stellmotor mit einem beweglichen Stellelement zusammenwirkt und der Stellmotor von einem Druckregelventil nach Maßgabe von motorspezifischen Parametern angesteuert wird. Zur Schaffung einer schnell ansprechenden und baulich einfachen Vorrichtung ist das Stellelement einerseits ständig mit atmosphärischem Druck und andererseits mit über das Druckregelventil steuerbarem Unterdruck sowie mit einer Rückstellfeder beaufschlagt.

Aus der WO 2007/138325 A2 ist eine Wastegate-Ventilanordnung für einen Abgasturbolader bekannt, wobei eine erste Bypassöffnung mit einem ersten Abschnitt eines Abgaseinlasses in Verbindung steht und ein erstes Ventilelement ist derart ausgebildet, dass es dichtend in einen ersten Ventilsitz, welcher die erste Bypassöffnung umgibt, eingreift. Die Wastegate-Ventilanordnung umfasst weiterhin eine zweite Bypassöffnung, die mit einem zweiten Abschnitt des Abgaseinlasses in Verbindung steht, wobei ein zweites Ventilelement derart ausgebildet ist, dass es dichtend in einen zweiten Ventilsitz, welcher die zweite Bypassöffnung umgibt, eingreift. Eine Achse trägt beide Ventilelemente derart, dass eine Drehung um die Achse beide Ventilelemente von dem jeweiligen Ventilsitz abhebt. Der erste Ventilsitz ist relativ zum zweiten Ventilsitz verkippt angeordnet und die Achse ist in deren axialer Richtung bewegbar.

Aus der WO 2007/002520 A1 ist ein Wastegate-Ventil zum Steuern eines Abgasmassenstromes in einem Abgaseinlass eines Abgasturboladers bekannt. Das Wastegate-Ventil umfasst mehrere Bypassöffnungen, die jeweils von einem Tellerventil geöffnet bzw. geschlossen werden. Zwei über einen Hebelmechanismus mechanisch miteinander verbundene Tellerventile sind derart angeordnet, dass der Druck des Abgases im Abgaseinlass eines der Tellerventile in Öffnungsrichtung und eines der Tellerventile in Schließrichtung mit Kraft beaufschlagt. Dadurch heben sich die auf die miteinander verbundenen Tellerventile aufgrund des Abgasdruckes wirkenden Kräfte auf, wodurch sich die Stellkräfte für das Wastegate-Ventil zum Verstellen oder Aufrechterhalten einer Position reduzieren. Aus dem Gehäuse herausgeführte Betätigungswellen sind bezüglich der durch höherfrequente Druckschwingungen auf den Ventilelementen angeregten Momenten nicht lastfrei. Da der Lastausgleich über mehrere Bauteile, die mindestens zwei Spiele aufweisen, außerhalb des ATL-Gehäuses erfolgt, sind kleine hochfrequente Schwingungen der belasteten Betätigungswellen zu erwarten ("äußerer Ausgleich").

Das Dokument DE 12 64 190 B zeigt eine Absperrvorrichtung für Luft- oder Rauchgaskanäle mit zwei Klappenflügeln, welche über eine Traverse miteinander verbunden sind. Zur Gewährleistung eines stets einwandfreien Dichtsitzes sind die Dichtflächen sowohl radial als auch axial verstellbar ausgebildet.

Das Dokument WO 2007/002520 A1 offenbart ein Wastegate-Ventil, welches zwei Ventile umfasst. Die Ventile sind über ein Gestänge miteinander gekoppelt und derart angeordnet, dass der das Wastegate-Ventil durchströmende Abgasstrom ein erstes Ventil in Öffnungsrichtung de Ventils und ein zweites Ventil in Schließrichtung des Ventils beaufschlagt.

Die Schrift US 2003/075159 A1 zeigt ein Abgasrückführungsventil, welches gemäß einer Ausführungsform zwei Ventile umfasst, welche über eine gemeinsame Motorwelle mittels eines Koppelhebels betätigt werden. Dabei sind die Öffnungs- beziehungsweise Schließrichtungen der beiden Ventile jeweils gegensinnig zueinander gerichtet.

Der Erfindung liegt die Aufgabe zugrunde, unerwünschte akustische Emissionen einer Fluidleitung einer Brennkraftmaschine mit einem Ventil zu vermeiden und Bauteilbeschädigungen aufgrund von pulsierenden Druckbelastungen aus dem Fluidstrom durch die Fluidleitung zu minimieren.

Diese Aufgabe wird erfindungsgemäß durch eine Fluidleitung der o.g. Art mit den in Anspruch 1 angegebenen Merkmalen gelöst. Vorteilhafte Ausgestaltungen der Erfindung sind in den weiteren Ansprüchen beschrieben.

Die erfindungsgemäße Fluidleitung einer Brennkraftmaschine mit einem Ventil zum Einstellen eines Fluidmassenstromes in der Fluidleitung weist wenigstens auf: Mindestens eine erste Strömungsöffnung mit einem ersten Ventilsitz und mindestens ein mit dem ersten Ventilsitz zusammenwirkendes erstes Ventilelement, so dass das erste Ventilelement die erste Strömungsöffnung wahlweise mit variablem Strömungsquerschnitt öffnet oder fluiddicht verschließt, sowie mindestens eine zweite Strömungsöffnung mit einem zweiten Ventilsitz und mindestens ein mit dem zweiten Ventilsitz zusammenwirkendes zweites Ventilelement, so dass das zweite Ventilelement die zweite Strömungsöffnung wahlweise mit variablem Strömungsquerschnitt öffnet oder fluiddicht verschließt. Dabei ist der erste Ventilsitz an einem bezüglich des Fluidmassenstromes durch die Fluidleitung stromabseitigen Ende der ersten Strömungsöffnung und der zweite Ventilsitz an einem bezüglich des Fluidmassenstromes durch die Fluidleitung stromaufseitigen Ende der zweiten Strömungsöffnung ausgebildet. Erfindungsgemäß weist das Ventil einen um eine Schwenkachse verschwenkbaren Hebel mit mindestens einem ersten Hebelarm und mindestens einem zweiten Hebelarm, die an der Schwenkachse miteinander starr verbunden sind, auf. Dabei sind das erste Ventilelement an dem ersten Hebelarm um eine vorbestimmte erste Länge ($l_1$) beabstandet von der Schwenkachse und das zweite Ventilelement an dem zweiten Hebelarm um eine vorbestimmte zweite Länge ($l_2$) beabstandet von der Schwenkachse derart angeordnet, dass ein Verschwenken des Hebels um die Schwenkachse in eine erste Richtung beide Ventilelemente von deren jeweiligen Ventilsitz weg bewegt und ein Verschwenken in eine entgegengesetzte zweite Richtung beide Ventilelemente zu deren jeweiligen Ventilsitz hin bewegt.

Dazu ist es bei einem Ventil der o.g. Art erfindungsgemäß vorgesehen, dass das Ventil einen um eine Schwenkachse verschwenkbaren Hebel mit mindestens einem ersten Hebelarm und mindestens einem zweiten Hebelarm, die an der Schwenkachse miteinander starr verbunden sind, aufweist, wobei das erste Ventilelement an dem ersten Hebelarm um eine vorbestimmte erste Länge beabstandet von der Schwenkachse und das zweite Ventilelement an dem zweiten Hebelarm um eine vorbestimmte zweite Länge beabstandet von der Schwenkachse derart angeordnet sind, dass ein Verschwenken des Hebels um die Schwenkachse in eine erste Richtung beide Ventilelemente von deren jeweiligen Ventilsitz weg bewegt und ein Verschwenken in eine entgegengesetzte zweite Richtung beide Ventilelemente zu deren jeweiligen Ventilsitz hin bewegt.

Dies hat den Vorteil, dass durch den ventilnahen Ausgleich der Abgasdrucklasten auf den Abdichtelementen eine Lösung zur Vermeidung oder Minimierung für den abrasiven oder adhäsiven Verschleiß in der Welle/Buchse-Paarung zur Verfügung steht, der zusätzlich bei geeigneter Auslegung der Bauteile das Ventilprasseln verhindert. Der Momentenausgleich erfolgt bei der Erfindung auf kürzestem Weg über ein einziges Bauteilinnerhalb des ATL-Gehäuses ("innerer Ausgleich"). Demgemäß sind keine weiteren Bauteile oder Lagerstellen an der hochfrequenten Bewegung beteiligt und gleichzeitig mit Lasten beaufschlagt. Dieses gilt im Besonderen für die verschleißgefährdete Lagerung der Betätigungswelle(n) im ATL-Gehäuse.

Zum Spielausgleich und Sicherstellen eines funktionssicheren Schließens beider Strömungsöffnungen in Schließstellung des Ventils ist das erste und/oder zweite Ventilelement erfindungsgemäß über jeweils ein federelastisches Element mit dem jeweiligen Hebelarm verbunden, wobei das federelastische Element derart angeordnet und ausgebildet ist, dass es eine Kraft auf das jeweilige Ventilelement in Schließrichtung bezogen auf das Verschließen der jeweiligen Strömungsöffnung durch Zusammenwirken von Ventilelement und Ventilsitz ausübt.

Eine exakte Aufhebung der Momente auf die Schwenkachse, die durch Kräfte an den Ventilelementen bei homogen verteilt angenommenen Druckverhältnissen des Fluidmassenstromes entstehen, erzielt man dadurch, dass die vorbestimmte erste Länge gleich der vorbestimmten zweiten Länge ist und dass eine von dem Fluidmassenstrom beaufschlagte Fläche des ersten Vehtilelementes gleich einer von dem Fluidmassenstrom beaufschlagte Fläche des zweiten Ventilelementes ist.

Eine Möglichkeit der variablen Ausgestaltung der Hebelarme und der Ventilelemente angepasst an jeweilige Umgebungsbedingungen und mechanische Randbedingungen erzielt man dadurch, dass ein Verhältnis zwischen der vorbestimmten ersten und zweiten Länge sowie ein Verhältnis zwischen einer von dem Fluidmassenstrom beaufschlagten Fläche jeweils des ersten und zweiten Ventilelementes derart ausgebildet ist, dass sich die von den auf die Ventilelemente wirkenden Fluidmassenstromdruckkräften über die den Ventilelementen jeweils zugeordneten Hebel übertragenen Momente an der Schwenkachse im Wesentlichen gegenseitig aufheben.

Eine an den vorhanden Bauraum angepasste Anordnung und Ausbildung der Hebelarme erzielt man dadurch, dass die Hebelarme parallel oder zueinander abgewinkelt angeordnet sind bzw. dass mindestens einer der Hebelarme gekröpft ausgebildet ist.

Eine mechanisch besonders einfache und gleichzeitig funktionssichere Ausgestaltung des Ventils erzielt man dadurch, dass das erste und/oder zweite Ventilelement als Ventilklappe oder Ventilteller ausgebildet ist.

Eine Fail-Safe-Funktion für den Ausfall eines mir der Schwenkachse verbundenen und diese betätigenden Aktors erzielt man dadurch, dass an der Schwenkachse eine federelastische Vorrichtung derart angeordnet und ausgebildet ist, dass diese federelastische Vorrichtung eine federelastische Vorspannkraft auf die Schwenkachse in die zweite Richtung des Verschwenkens des Hebels um die Schwenkachse ausübt.

Ein einfaches Öffnen und Schließen des Ventils erzielt man dadurch, dass an der Schwenkachse ein Aktor, insbesondere ein elektrischer oder pneumatischer Aktor, angeordnet ist, der die Schwenkachse derart bewegt, dass der Hebel um die Schwenkachse verschwenkt.

In einer besonders bevorzugten Ausführungsform ist das Ventil ein Wastegate-Ventil eines Abgasturboladers einer Brennkraftmaschine und der Fluidmassenstrom ein Abgasmassenstrom. Diese Konkretisierung der Erfindung stellt einen besonders bedeutsamen Anwendungsfall dar, weil akustische Emissionen eines Wastegate-Ventils (Wastegate-Prasseln) sehr unerwünscht sind und erfindungsgemäß deutlich reduziert, bevorzugt ganz vermieden werden können. Auf diese Weise werden in vorteilhafter Konsequenz Bauteilbeschädigungen aufgrund von pulsierendem Abgas vermieden.

Im Zusammenhang des erfinderischen Gedankens steht auch eine Brennkraftmaschine mit einer erfindungsgemäßen Fluidleitung mit den Merkmalen oder einer Merkmalskombination gemäß dieser Darstellung.

Insbesondere kann die Fluidleitung ein Teil des Abgasleitungssystems der Brennkraftmaschine sein. Besonders bevorzugt ist die Brennkraftmaschine eine aufladbare Brennkraftmaschine, insbesondere mittels eines Abgasturboladers. Wenigstens weist die aufladbare Brennkraftmaschine wenigstens eine Turbine mit einer Umgehungsleitung auf, in welcher das erfindungsgemäße Ventil zum wahlweisen Schließen und Öffnen der Umgehungsleitung angeordnet ist, wobei der Fluidmassenstrom ein Abgasmassenstrom ist.

Alternativ dazu kann die Fluidleitung ein Teil einer Abgasrückführungsleitung sein.

Die Erfindung wird im Folgenden unter Bezugnahme auf die Zeichnung näher erläutert. Diese zeigt in

Fig. 1     eine Prinzipdarstellung einer erfindungsgemäßen Fluidleitung in schematischer Schnittansicht,

Fig. 2     eine erste bevorzugte Ausführungsform einer erfindungsgemäßen Fluidleitung in schematischer Schnittansicht in geschlossener Stellung,

Fig. 3     die erste bevorzugte Ausführungsform einer erfindungsgemäßen Fluidleitung gemäß Fig. 2 in schematischer Schnittansicht in offener Stellung,

Fig. 4     die erste bevorzugte Ausführungsform einer erfindungsgemäßen Fluidleitung gemäß Fig. 2 in schematischer Draufsicht,

Fig. 5     die erste bevorzugte Ausführungsform einer erfindungsgemäßen Fluidleitung gemäß Fig. 2 in schematischer Schnittansicht in offener Stellung mit den verschiedenen wirkenden Kräften und Drehmomenten in einem stationären Zustand,

Fig. 6     die erste bevorzugte Ausführungsform einer erfindungsgemäßen Fluidleitung gemäß Fig. 2 in schematischer Schnittansicht in offener Stellung mit den verschiedenen wirkenden Kräften und Drehmomenten in einem dynamischen Übergang,

Fig. 7     eine zweite bevorzugte Ausführungsform einer erfindungsgemäßen Fluidleitung in schematischer Schnittansicht in geschlossener Stellung,

Fig. 8     die zweite bevorzugte Ausführungsform einer erfindungsgemäßen Fluidleitung gemäß Fig. 7 in schematischer Schnittansicht in offener Stellung,

Fig. 9     die zweite bevorzugte Ausführungsform einer erfindungsgemäßen Fluidleitung gemäß Fig. 7 in schematischer Draufsicht,

Fig. 10     eine dritte bevorzugte Ausführungsform einer erfindungsgemäßen Fluidleitung in schematischer Schnittansicht in geschlossener Stellung,

Fig. 11     die dritte bevorzugte Ausführungsform einer erfindungsgemäßen Fluidleitung gemäß Fig. 10 in schematischer Schnittansicht in offener Stellung,

Fig. 12     eine vierte bevorzugte Ausführungsform einer erfindungsgemäßen Fluidleitung in schematischer Schnittansicht in geschlossener Stellung und

Fig. 13     die vierte bevorzugte Ausführungsform einer erfindungsgemäßen Fluidleitung gemäß Fig. 12 in schematischer Schnittansicht in offener Stellung.,

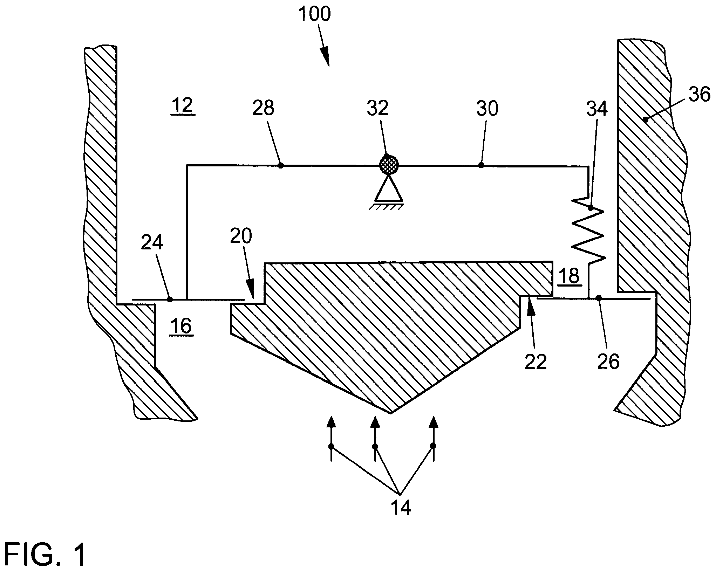

Die in Fig. 1 bis 3 veranschaulichte, prinzipielle Ausgestaltung der Erfindung umfasst ein Ventil 10 in einem Fluidkanal 12, wobei ein Fluid in dem Fluidkanal in Richtung der Pfeile 14 strömt. Beispielhaft handelt es sich bei dem Ventil 10 um ein Wastegate-Ventil und bei dem Fluidkanal 12 um einen Bypasskanal für einen ansonsten nicht näher dargestellten Abgasturbolader und bei dem Fluid um Abgas, wobei in diesem Fall der Bypasskanal das Abgas an einem Turbinenrad des Abgasturbolader vorbei führt, so dass weniger Energie von dem Abgas auf das Turbinenrad übertragen wird. Das Ventil 10 weist zwei voneinander beabstandete Strömungsöffnungen auf, nämlich eine erste Strömungsöffnung 16 und eine zweite Strömungsöffnung 18. An der ersten Strömungsöffnung 16 ist stromabseitig bezogen auf die Strömungsrichtung 14 des Fluides ein erster Ventilsitz 20 ausgebildet. An der zweiten Strömungsöffnung 18 ist stromaufseitig bezogen auf die Strömungsrichtung 14 des Fluides ein zweiter Ventilsitz 22 ausgebildet. Das Ventil weist ferner ein erstes Ventilelement 24, das mit dem ersten Ventilsitz 20 zusammen wirkt, und ein zweites Ventilelement 26, das mit dem zweiten Ventilsitz 22 zusammen wirkt, auf. Die Ventilelemente 24, 26 wirken mit dem jeweiligen Ventilsitz 20, 22 derart zusammen, dass wahlweise die Strömungsöffnungen 16, 18 fluiddicht verschlossen werden, wobei in diesem Fall die Ventilelemente 24, 26 dichtend an dem jeweiligen Ventilsitz 20, 22 anliegen, oder mit einem variablen Strömungsquerschnitt geöffnet werden, wobei in diesem Fall die Ventilelemente 24, 26 von dem jeweiligen Ventilsitz 20, 22 mehr oder weniger weit abgehoben sind.

Zum Betätigen der Ventilelemente 24, 26 zum wahlweise Öffnen oder Schließen der Strömungsöffnungen 16, 18 weist das Ventil 10 einen Hebel mit einem ersten Hebelarm 28 und einen zweiten Hebelarm 20 auf. Diese Hebelarme sind an einer oder über eine Betätigungswelle bzw. Schwenkachse 32 starr miteinander verbunden, wobei der Hebel mit den Hebelarmen 28, 30 um die Achse 32 verschwenkbar ist. Das erste Ventilelement 24 ist an dem ersten Hebelarm 28 an einer ersten Stelle um eine erste Länge $l_1$ beabstandet von der Achse 32 angeordnet und das zweite Ventilelement 26 ist an dem zweiten Hebelarm 30 an einer zweiten Stelle um eine zweite Länge $l_2$ beabstandet von der Achse 32 angeordnet. Ein Verschwenken des Hebels führt dementsprechend zu einer Bewegung der Ventilelemente 24, 26, wobei die Ventilelemente 24, 26 je nach Richtung der Schwenkbewegung des Hebels zu den Strömungsöffnungen 16, 18 hin oder von diesen weg bewegt werden. Hierbei ist die Anordnung von Hebel und Ventilelementen derart,.dass eine Schwenkbewegung des Hebel immer gleichzeitig beide Ventilelemente 24, 26 entweder zu der jeweiligen Strömungsöffnung 16, 18 hin, d.h. in Schließrichtung, oder von diesen weg, d.h. in Öffnungsrichtung, bewegt. Die Ventilelemente 24, 26 sind beispielsweise als Ventilklappen ausgebildet. Mit anderen Worten ist das Ventil 10 als Ventil-Waage ausgebildet. Die Schenkachse 32 ist entsprechend gelagert und radial sowie axial gegen eine Translationsbewegung fixiert.

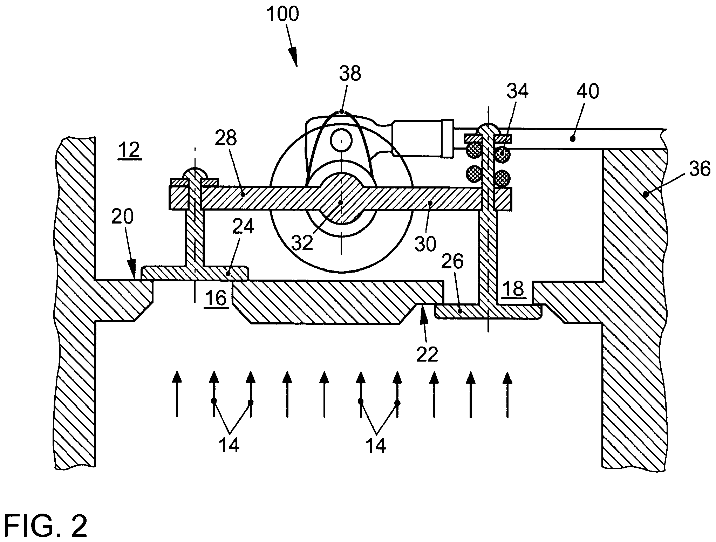

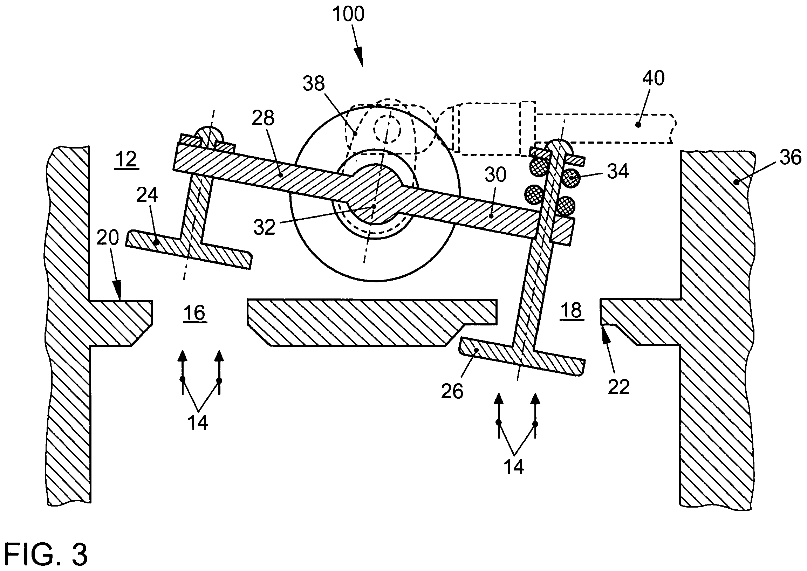

Das zweite Ventilelement 26 ist zum Spielausgleich über eine Elastizität 34 an den zweiten Hebelarm 30 angebunden. Diese Elastizität 34 ist beispielsweise eine Schraubenfeder, wie in Fig. 2 und 3 dargestellt, und ist derart angeordnet, dass diese das zweite Ventilelement 26 in Richtung der Schließstellung bzw. in Richtung auf den zweiten Ventilsitz 22 hin bzw. gegen den zweiten Ventilsitz 22 mit einer federelastischen Kraft beaufschlagt.

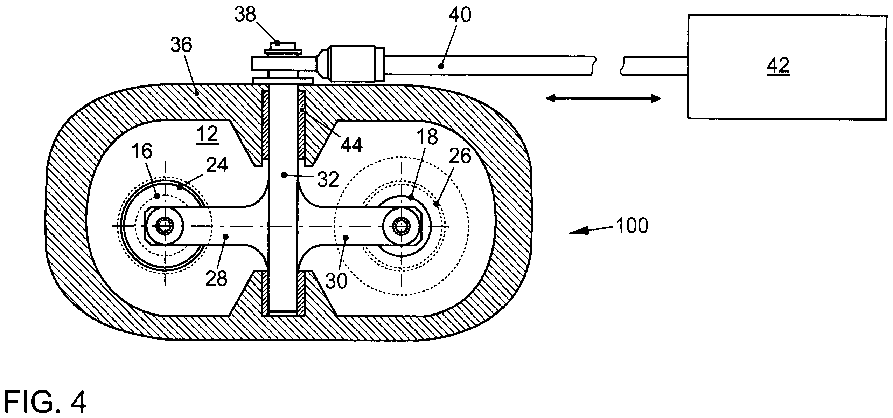

Die Schwenkachse 32 ist zweifach gelagert, wobei sie über ein breiteres Lager 44 (Fig. 4) durch ein Gehäuse 36 nach außen geführt ist. Dort ist sie über einen Schwenkhebel 38 mit einer Kolbenstange 40.eines außenliegenden Stellerantriebs bzw. Aktors 42 verbunden. Der Antrieb kann sowohl über einen Elektromotor mit Getriebe als auch mittels pneumatischem Steller erfolgen. Zwischen Aktor 42 und Kolbenstange 40 ist bevorzugt eine Fail-Safe-Feder (nicht dargestellt) angeordnet, die bei funktionsunfähigem Aktor 42, also beispielsweise stromlosem Elektromotor oder drucklosem Pneumatikantrieb, zur Vermeidung von beispielsweise Turbinenradüberdrehzahlen ein spontanes Ventilöffnen sicherstellt. Ein besonderer Vorteil liegt darin, dass für den Stellmechanismus vom Aktuator bis zur Welle keine konstruktiven Topologieänderungen vorgenommen werden müssen. Es ist jedoch auch möglich, eine Ventilwaage ohne Widerlager vorzusehen. Mit anderen Worte ist für die Schwenkachse sowohl eine Einfachlagerung, wie auch eine Zweifachlagerung, wie in Fig. 4 dargestellt, vorzusehen.

Die vorliegende Erfindung kommt bevorzugt bei allen Ventilstellsystemen, insbesondere allen Wastegate-Ventilstellsysteme, zur Anwendung, die eine Betätigung über eine drehbar gelagerte Betätigungswelle bzw. Achse 32 vorsehen.

Das erfindungsgemäße Ventil dient der Einstellung eines definierten Strömungsquerschnitts jeweils an der ersten und zweiten Strömungsöffnung 16, 18, so dass ein Fluidmassenstrom des Fluides durch den Fluidkanal 12 beeinflusst und somit im Falle eines Wastegate-Ventils ein Ladedruck einer Ladeluft eingestellt wird. Soll in diesem Fall der Ladeluft die maximale Verdichtungsleistung zugeführt werden, so muss der Fluidkanal 12 (Bypasskanal) verschlossen werden. Fig. 1 und 2 zeigen das Ventil 10 mit geschlossenen Ventilelementen 24, 26 im Rahmen einer einfachen, das Wirkprinzip wiedergebenden schematischen Darstellung. Als Steller bzw. Aktor 42 wird beispielsweise ein translatorischer Steller eingesetzt, dessen translatorische Bewegung über ein Hebelsystem, vorliegend über den Schwenkhebel 38, in eine rotatorische Bewegung umgewandelt wird.

Das Schließen der Ventilelemente 24, 26 bzw. Ventilklappen, d.h. das Anlegen bzw. Anpressen der Ventilelemente 24, 26 gegen die Ventilsitze 20, 22, wie in Fig. 1 und 2 dargestellt, erfolgt über eine entsprechende Ansteuerung des Aktors 42, so dass ein für eine "Geschlossen-Position" vorgegebener Sollwert als Istposition eingestellt wird. Hierfür wird durch den Aktor 42 eine Kraft aufgebracht, aus welcher sich mit den vorliegenden Hebelverhältnissen an der Achse 32 bzw. an dem Drehlager des Waagensystems ein Drehmoment einstellt, welches ausreichend groß ist, um die aus Kräften der Fail-Safe-Feder resultierenden Drehmomente auszugleichen und zudem eine ausreichende Dichtkraft an den als Festlager dienenden Ventilsitzen 20, 22 (Anschlägen) sicherzustellen. Das aus dieser Federkraft resultierende Drehmoment stellt hierbei im Vergleich zu dem aus den Kräften des strömenden Fluides resultierenden Drehmoment den dominanten Anteil dar, da sich beim dargestellten Funktionsprinzip der Ventil-Waage mit auf zwei Strömungsöffnungen 16, 18 geteiltem Fluidmassenstrom und zwei über den Hebel verbundenen Ventilelementen 24, 26 die sich aus den Kräften des Fluidmassentromes ergebenden Drehmomente im Idealfall an der Achse 32 weitestgehend gegenseitig aufheben.

Um eine ausreichende Dichtigkeit an den Strömungsöffnungen 16, 18 zu gewährleisten, ist neben der entsprechenden Stellkraft durch den Aktor 42 auch die bereits erwähnte und dargestellten Elastizität 34 vorgesehen. Bei einer direkten Anbindung des zweiten Ventilelementes 26 an den zweiten Hebelarm des Waagensystems ergibt sich ein mechanisches System mit statisch überbestimmter Lagerung mit der Folge, dass durch entsprechende Fertigungstoleranzen, temperaturbedingte Längenausdehnung, etc. das erste Ventilelement 24 oder das zweite Ventilelement 26 aufgrund unterschiedlicher Abstände zum jeweiligen Hebelarm 28, 30 nicht vollständig schließen. Um Längenunterschiede zu kompensieren, ist die vorgespannte Elastizität 34 vorgesehen. Dieser Spielausgleich ist beispielsweise konstruktiv durch ein als Druckfeder ausgeführtes Federtellerpaket ausgebildet.

Soll im Falle eines Wastegate-Ventils nicht die maximale Verdichterleistung erzielt oder eine Turbinenradüberdrehzahl vermieden werden, so wird ein Teil des Fluidmassenstromes durch definiertes Öffnen des Strömungsquerschnitts zwischen den Ventilsitzen 20, 22 und den Ventilelementen 24, 26 über den Fluidkanal 12 am Turbinenrad des Abgasturboladers vorbeigeführt, so dass sich der in Fig. 3 dargestellte Zustand einstellt.

Das definierte Öffnen des Strömungsquerschnitts erfolgt auch hier über eine entsprechende Ansteuerung des Aktors 42, welcher die zu den vorgegebenen Sollpositionen korrespondierenden Istpositionen einstellt. Hierbei bringt der Aktor 42 über die Kolbenstange 40, den Schwenkhebel 38 und die Betätigungswelle 32 ein Drehmoment auf, welches wieder die aus dem Fluidmassenstrom auf die Ventilelemente 24, 26 und den Hebelmechanismus resultierenden Kräfte sowie das aus der Fail-Safe-Feder resultierende, auf den Hebel wirkende Drehmoment beim Ventilschließen und Zuhalten über- und beim Ventilöffnen unterkompensiert. Wie bereits für den Zustand mit geschlossenen Ventilelementen 24, 26 erläutert, heben sich aufgrund des zugrundeliegenden Funktionsprinzips mit geteiltem Fluidmassenstrom und zwei über einen Hebel verbundene Ventilelemente 24, 26 die aus den Kräften des Fluidmassenstromes resultierenden Drehmomente im Idealfall weitestgehend gegenseitig auf.

Bei geschlossenen Ventilelementen 24, 26 muss die Ansteuerung des Aktors 42 sicherstellen, dass die an den Festlagern bzw. Ventilsitzen 20, 22 wirkende Dichtkraft ausreichend groß ist, so dass auch bei nicht idealer Kompensation der aus den Kräften des Fluidmassenstromes resultierenden Drehmomenten die Ventilelemente 24, 26 in ihrer "Geschlossen-Position" verharren und kein Fluid über den Fluidkanal 12 entweicht. Bei geöffneten Ventilelementen 24, 26 muss zur Gewährleistung einer ausreichenden Regelgüte des Fluidmassenstromes bzw. im Falle eines Wastegate-Ventils zur Gewährleistung einer ausreichenden Regelgüte einer Ladedruckregelung durch eine entsprechende Ansteuerung des Aktors 42 sichergestellt werden, dass die Ventilelemente 24, 26 definierte Positionen einnehmen und somit definierte Strömungsquerschnitte freigeben. Ebenso muss zur Gewährleistung einer ausreichenden Regelgüte durch eine entsprechende Ansteuerung des Aktors 42 sichergestellt werden, dass die Einstellung unterschiedlicher Istpositionen der Ventilelemente 24, 26 mit der gewünschten Dynamik (Schnelligkeit, Überschwingen, etc.) erreicht wird.

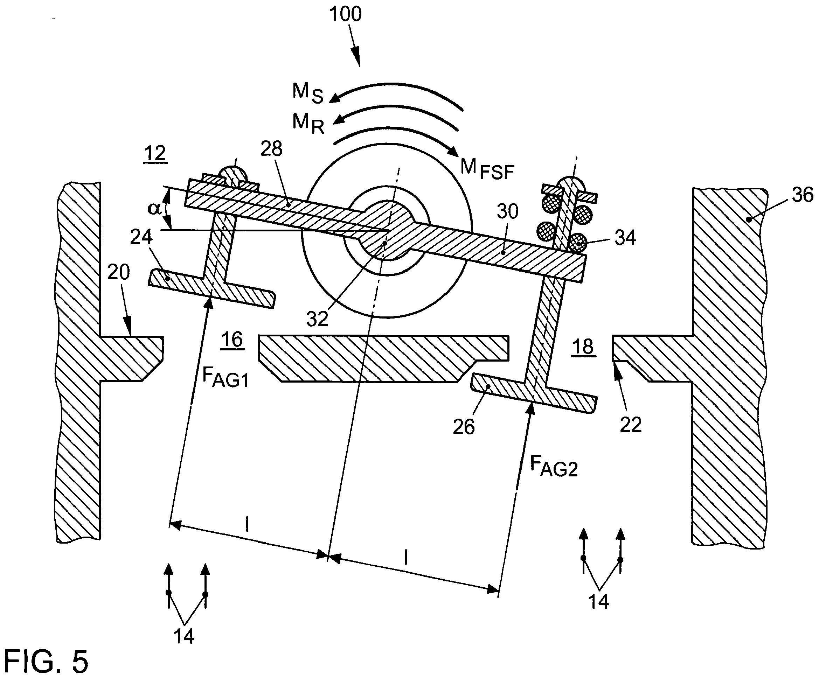

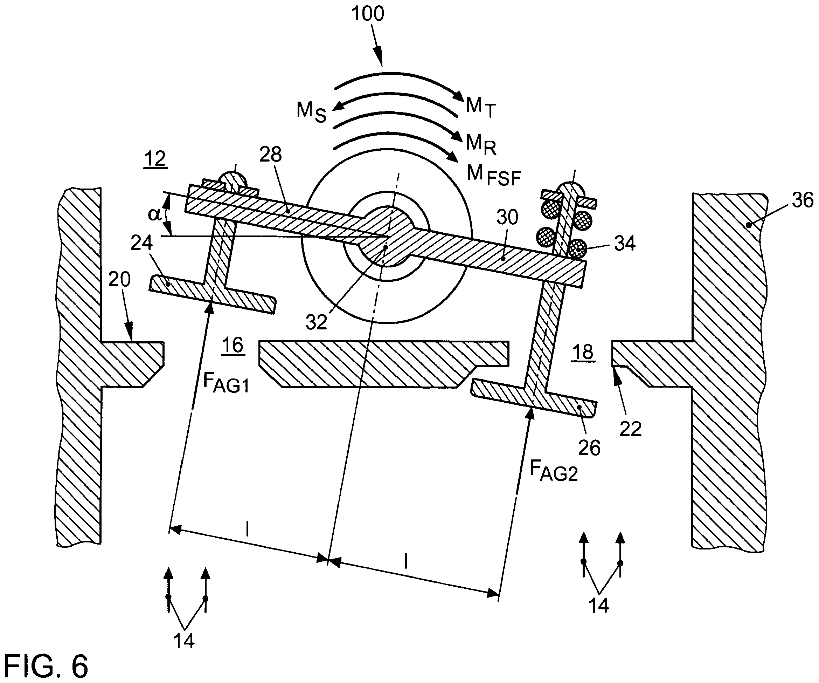

Nachfolgend wird anhand der Fig. 5 und 6 näher betrachtet, welche Kräfte und Drehmomente am Ventil 10 auftreten und wie diese miteinander sowie mit der Ansteuerung des Ventils 10 in Zusammenhang stehen. In den Fig. 5 und 6 sind funktionsgleiche Teile mit gleichen Bezugzeichen versehen, wie in den Fig. 1 bis 4, so dass zu deren Erläuterung auf die obige Beschreibung der Fig. 1 bis 4 verwiesen wird.

Fig. 5 zeigt die an dem Ventil 10 bzw. der Ventil-Waage wirkenden Kräfte und Drehmomente, wobei auf eine Darstellung der hieraus wirkenden Lagerkräfte aus Gründen der Übersichtlichkeit verzichtet wurde. Wirkende Kräfte und Drehmomente sind im Wesentlichen die beiden aus dem Fluidmassenstrom resultierenden Kräfte $F_{AG1}$ und $F_{AG2}$, das über den Aktor 42 (in Fig. 5 nicht dargestellt) eingebrachte Aktordrehmoment $M_S$, das im Drehlager wirkende Reibmoment $M_R$ sowie das aus der Fail-Safe-Feder wirkende Drehmoment $M_{FSF}$. Mit I ist der Abstand der Ventilelemente 24, 26 von der Achse 32 bezeichnet.

Da das Schwenkgelenk keine Drehmomente aufnehmen kann, ergibt sich im stationären Zustand (d.h. Waagensystem hat einen konstanten Winkel $\alpha$, die Drehgeschwindigkeit ist 0) die Drehmomentbilanz

$$M_S + \dot{M_R} - M_{FSF} - F_{AG1}l + F_{AG2}l = 0 \qquad 5.1$$

aus der sich durch Umstellung das für das Halten der Position notwendige Stellmoment $M_S$ ergibt zu

$$M_S = M_{FSF} - M_R + F_{AG1}l - F_{AG2}l \qquad 5.2$$

Unter der Annahme, dass die aus dem Fluidmassenstrom resultierenden Kräfte $F_{AG1}$ und $F_{AG2}$ im Idealfall an beiden Ventilelementen 24,26 identisch sind, ergibt sich mit

$$F_{AG1} = F_{AG2} \qquad 5.3$$

das notwendige Drehmoment MS des Aktors 42 zu

$$M_S = M_{FSF} - M_R \qquad 5.4$$

Die aus der Summe der Kräfte durch den Abgasmassenstrom ($F_{AG1}$ + $F_{AG2}$) resultierende Lagerlast stützt sich nicht mehr wie bei herkömmlichen Ventilsystemen, insbesondere herkömmlichen Wastegate-Ventilsystemen, auf einem Lager, sondern auf zwei Lagern ab.

Wie anhand von Gleichung 5.4 zu erkennen ist, muss der Aktor 42 im stationären Fall bei konstanter Position nur das stationäre Drehmoment $M_{FSF}$ aus der Fail-Safe-Feder abzüglich des wirkenden Reibmoments $M_R$ aufbringen. Hierdurch unterscheidet sich die erfindungsgemäße Ventil-Waage wesentlich zu üblichen Ventilkonzepten, insbesondere Wastegate-Ventilkonzepten, bei denen sich die Kräfte aus dem Fluidmassenstrom, insbesondere aus einem Abgasmassenstrom, nicht gegenseitig kompensieren. Normalerweise beinhalten diese Kräfte aus dem Fluidmassenstrom neben Gleichanteilen und niederfrequenten Anteilen auch höherfrequente Anteile, welche der Aktor 42 bei üblichen Systemen nicht ausgleichen oder nur zu Lasten der Aktorlebensdauer ausregeln kann. Können die höherfrequenten Anteile der Kraft aus dem Fluidmassenstrom vom Aktor 42 nicht ausgeglichen werden, so ist die für den stationären Zustand gültige Drehmomentenbilanz aus Gleichung 5.1 nicht erfüllt. Bei .üblichen Systemen führt das Ventil 10, insbesondere das Ventil eines Wastegate-Systems, daher kleine, jedoch höherfrequente Bewegungen aus, was sich entsprechend auf den Verschleiß der Mechanik als auch auf die Regelgüte für den Fluidmassenstrom, insbesondere auf die Regelgüte der Ladeluft bei einem Wastegate-Ventil, auswirkt. Zwar stellt sich auch bei der erfindungsgemäßen Ventil-Waage nicht zwingend in allen Betriebsfällen, insbesondere in allen Betriebspunkten einer Brennkraftmaschine, die mit dem erfindungsgemäßen Ventil 10 als Wastegate-Ventil ausgestattet ist, eine ideale Kompensation gemäß Gleichung 5.3 ein, jedoch kann eine deutliche Reduktion der höherfrequenten Bewegungen erzielt werden. Gleichzeitig werden die höherfrequenten Belastungen der beteiligten Lagerstellen minimiert. Beides zusammen führt zu einer signifikanten Verringerung der für den Verschleiß der Reibpartner verantwortlichen Reibarbeit. Der Zusammenhang für die Reibarbeit $W_{Reib}$

$$W_{Reib} = k_r \cdot \int v(t) \cdot \overrightarrow{F(t)}dt \quad (= \text{Verschleiß})$$

führt auf Notwendigkeit, Kraft und Bewegung gleichermaßen zu minimieren. Die vorliegende Erfindung verringert die Wirkung der Kräfte durch internen Lastausgleich und damit gleichzeitig die resultierenden Schwingbewegungen an der Bewegung beteiligter Bauteile.

Fig. 6 zeigt die an der erfindungsgemäßen Ventil-Waage wirkenden Kräfte und Drehmomente während eines Positionswechsels. Unter Verwendung des aus der Beschleunigung resultierenden Drehmomentes $M_T$, welches sich aus der dem Massenträgheitsmoment J und der Winkelbeschleunigung ä gemäß

$$M_T = J\ddot{a} \qquad 5.5$$

berechnet, ergibt sich die Drehmomentenbilanz zu

$$M_S - J\ddot{a} - M_R - M_{FSF} - F_{AG1}l + F_{AG2}l = 0 \qquad 5.6$$

Unter der Annahme, dass sich das Reibmoment im Betriebsbereich annähernd proportional zur Drehgeschwindigkeit und das Drehmoment aus der Fail-Safe-Feder annähernd proportional zum Drehwinkel verhält, so ergibt sich durch Umformung von Gleichung 5.6 die Bewegungsgleichung

$$J\ddot{a} + d\dot{\alpha} + c\alpha = M_S - F_{AG1} \cdot l + F_{AG2} \cdot l \qquad 5.7$$

wobei d den Reibkoeffizienten und c die auf die Betätigungswelle reduzierte Drehsteifigkeit der Fail-Safe-Feder darstellen. Gleichung 5.7 beschreibt hierbei ein klassisches Feder-Masse-Dämpfer-System mit einer Eigenkreisfrequenz $\omega_0$ von

$$\omega_0 = \sqrt{\frac{c}{J}} \qquad 5.8$$

Aus systemtheoretischer Sicht entspricht dieses Feder-Masse-Dämpfer-System einem $PT_2$-Glied und somit einem Tiefpassfilter 2. Ordnung mit einer Eckfrequenz gleich der in Gleichung 5.8 angegebenen Eigenkreisfrequenz. Davon ausgehend, dass sich die aus den Fluidkräften bzw. Abgaskräften resultierenden Drehmomente zwar weitgehend, jedoch nicht vollständig kompensieren, bedeutet dies, dass das erfindungsgemäße Waagen-System nur durch Frequenzen kleiner oder im Bereich der Eigenkreisfrequenz, nicht jedoch durch deutlich größere Frequenzen angeregt wird. Es stellt sich dann eine Drehschwingung mit der Frequenz der anregenden Kräfte ein. Wird die Eigenfrequenz durch konstruktive Maßnahmen (Federsteifigkeit c, Massenträgheit J) ausreichend tief gelegt, können die niederfrequenten Drehschwingungen vom Aktor 42 ohne Einbußen bzgl. der Lebensdauer kompensiert werden. Höherfrequente Drehschwingungen wirken sich aufgrund des Tiefpassverhaltens des Feder-Masse-Dämpfer-Systems nicht auf den Drehwinkel $\alpha$ aus.

Aufgrund der weitgehenden Kompensation der aus den Kräften des Fluidmassenstroms, insbesondere des Abgasmassenstromes, resultierenden Drehmomente auf die Ventilelemente 24, 26 muss von der Ansteuerung im Wesentlichen nur noch das Drehmoment zur Überwindung des Reibmomentes und des aus der Fail-Safe-Feder resultierenden Drehmomentes sowie bei einem Positionswechsel das für die Beschleunigung der Masse notwendige Drehmoment aufgebracht werden. Dies lässt sich mit einer Steuerung (häufig auch als Vorsteuerung bezeichnet) weitgehend realisieren. Die Feineinstellung der Position wird dann bevorzugt durch eine überlagerte Positionsregelung umgesetzt. Da die Steuerung die Position grob einstellt und die Dynamik weitgehend vorgibt, ist die Verwendung eines einfachen Reglers möglich.

Ein für eine Positionsregelung ggf. notwendiger Positionssensor ist in den Fig. nicht dargestellt. Aufgrund der extremen Umgebungsbedingungen ist es bevorzugt, dass der Sensor nicht im Fluidkanal 12 bzw. im Strömungskanal, sondern außerhalb des Gehäuses 36 angeordnet ist. Da somit nicht direkt die Position der Ventilelemente 24, 26 geregelt wird, muss sichergestellt werden, dass Spiel, Längendehnung etc. zwischen Sensor und Ventilelementen 24, 26 hinreichend klein zum Erhalt der gewünschten Regelgüte sind.

Das erfindungsgemäße Ventil 10 in der Art einer Ventil-Waage zeichnet sich durch eine hohe Variabilität aus. Die dargestellte Ausführungsform gemäß der Fig. 1 bis 6 zeigt eine mögliche Umsetzungsvariante des erfindungsgemäßen Ventils 10, bei der von einer Gestaltung des Fluidkanals 12 und der Strömungsöffnungen 16, 18 derart ausgegangen wird, dass sich an beiden Ventilelementen 24, 26 gleiche Drücke einstellen, so dass sich bei gleichen Ventilelementflächen und gleichen Hebelverhältnissen am Waagen-System, d.h. gleich lange Hebel 28, 30, eine Kompensation der von dem Fluidmassenstrom an den Ventilelementen 24, 26 erzeugten Kräfte ergibt. Durch entsprechende Gestaltung der Strömungsöffnungen 16, 18 und des Fluidkanals 12 zur Ausbildung von bisher als identisch angenommenen Fluiddrücken $P_{AG1}$ $P_{AG2}$ sowie Auslegung der Ventilelementflächen $A_1$ und $A_2$ und der Hebelverhältnisse $l_1$ und $l_2$ bietet die erfindungsgemäße Ventil-Waage Freiheitsgrade bei der konstruktiven Gestaltung, wobei sich die aus den Fluidkräften resultierenden Drehmomente gegenseitig aufheben, wenn das Drehmomentgleichgewicht

$$F_{AG1}l_1 = p_{AG1}A_1l_1 = F_{AG2}l_2 = p_{AG2}A_2l_2 \qquad 5.9$$

gegeben ist. Damit ist eine hohe konstruktive Variabilität bezüglich der Lage der Schwenkachse 32 (Betätigungswelle) gegeben.

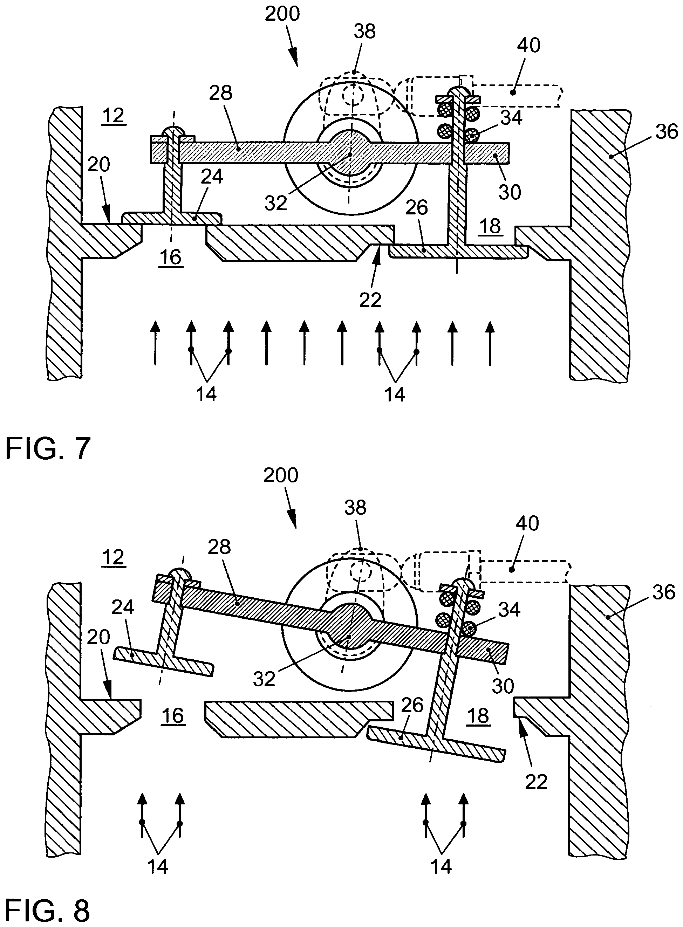

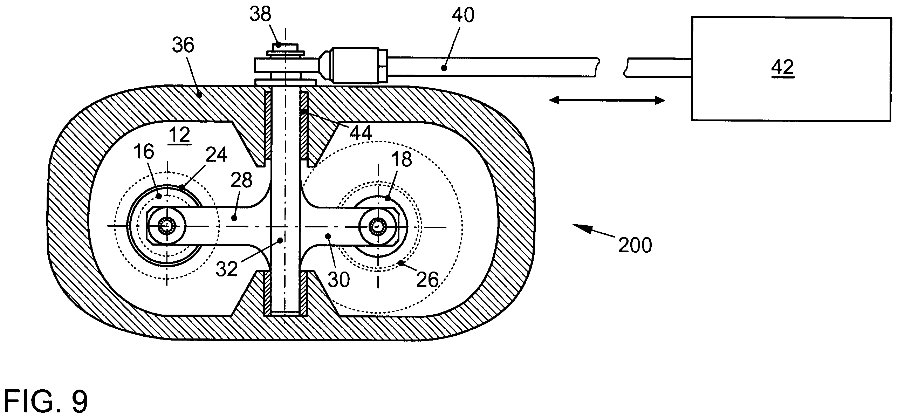

In Fig. 7 bis 9 ist eine zweite bevorzugte Ausführungsform des erfindungsgemäßen Ventils 200 dargestellt, wobei funktionsgleiche Teile mit gleichen Bezugszeichen bezeichnet sind, wie in den Fig. 1 bis 6, so dass zu deren Erläuterung auf die obige Beschreibung der Fig. 1 bis 6 verwiesen wird. Auch bei dieser zweiten Ausführungsform werden die Fluiddrücke an beiden Ventilelementen 24, 26 als identisch angenommen. Im Gegensatz zur ersten Ausführungsform gemäß der Fig. 1 bis 6 sind jedoch bei der zweiten Ausführungsform gemäß der Fig. 7 bis 9 die Hebelarme 28, 30 unterschiedlich lang ausgebildet und die Ventilelemente 24, 26 weisen unterschiedliche Flächen auf, so dass sich aus den Fluiddrücken unterschiedliche Kräfte an den Ventilelementen 24, 26 ergeben. Zusammen mit den unterschiedlichen Längen der Hebelarme 28, 30 kommt es jedoch an der Achse 32 wieder zur einer gegenseitigen Kompensation der auf den Hebel wirkenden Kräfte.

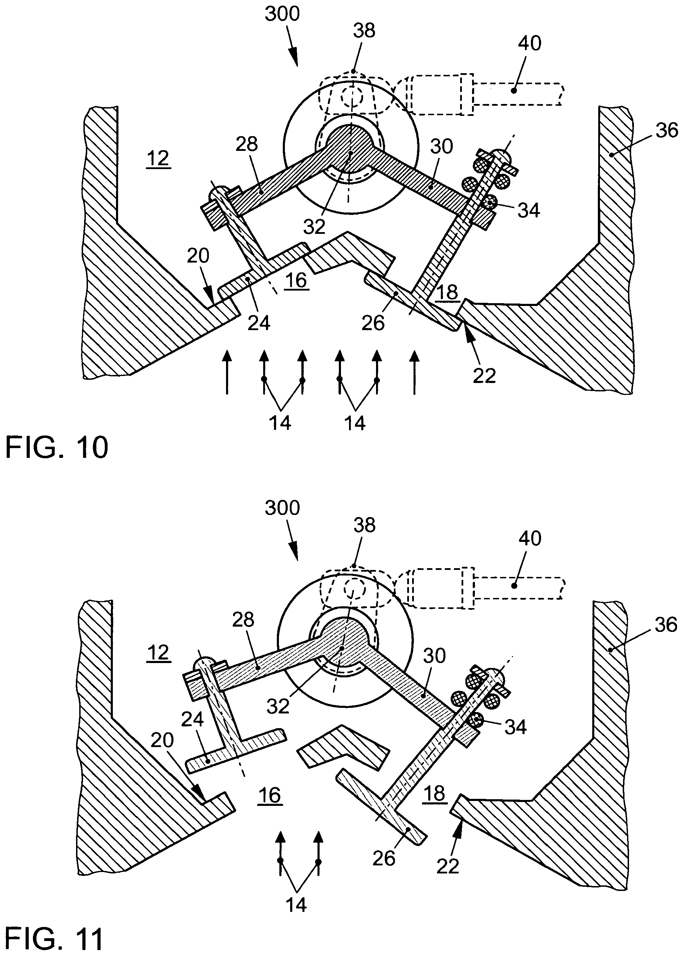

In Fig. 10 und 11 ist eine dritte bevorzugte Ausführungsform des erfindungsgemäßen Ventils 300 dargestellt, wobei funktionsgleiche Teile mit gleichen Bezugszeichen bezeichnet sind, wie in den Fig. 1 bis 9, so dass zu deren Erläuterung auf die obige Beschreibung der Fig. 1 bis 9 verwiesen wird. Im Gegensatz zur ersten Ausführungsform gemäß der Fig. 1 bis 6 und zur zweiten Ausführungsform gemäß der Fig. 7 bis 9 ist die Form der Hebelarme 28, 30 nicht mehr parallel geradlinig, sondern die Hebelarme 28, 30 sind zueinander um einen vorbestimmten Winkel verkippt, wobei der Scheitelpunkt des Winkels auf der Achse 32 liegt.

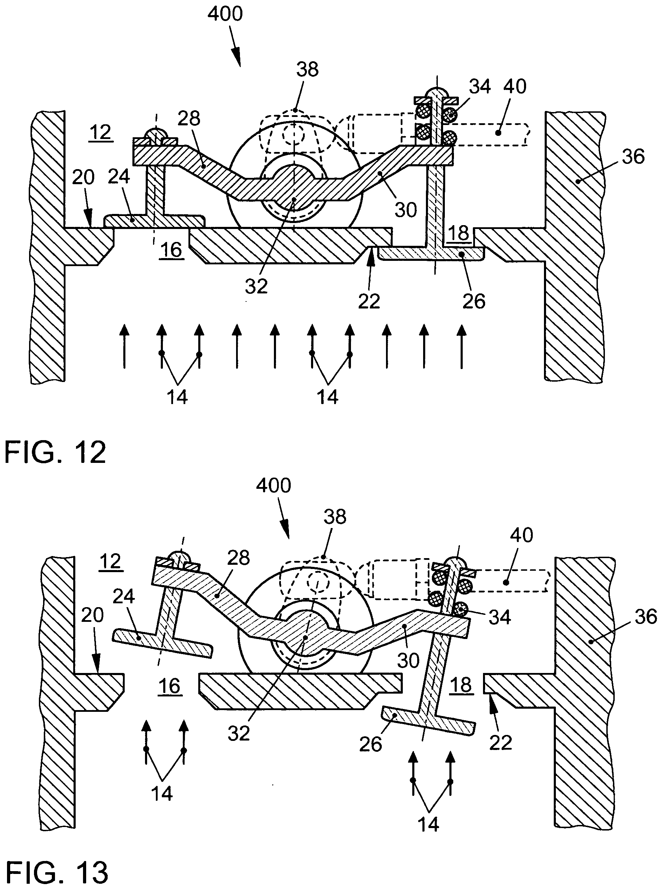

In Fig. 12 und 13 ist eine vierte bevorzugte Ausführungsform des erfindungsgemäßen Ventils 400 dargestellt, wobei funktionsgleiche Teile mit gleichen Bezugszeichen bezeichnet sind, wie in den Fig. 1 bis 11, so dass zu deren Erläuterung auf die obige Beschreibung der Fig. 1 bis 11 verwiesen wird. Im Gegensatz zur ersten Ausführungsform gemäß der Fig. 1 bis 6 und zur zweiten Ausführungsform gemäß der Fig. 7 bis 9 und zur dritten Ausführungsform gemäß der Fig. 10 und 11 ist die Form der Hebelarme 28, 30 nicht mehr geradlinig, sondern die Hebelarme 28, 30 sind gekröpft ausgebildet. Auch eine Kombination von gekröpften Hebelarmen 28, 30 mit unterschiedlich langen Hebelarmen sowie unterschiedlichen Flächen an den Ventilelementen 24, 26 ist möglich.

Die Fail-Safe-Feder kann entfallen, wenn Ventilelementdurchmesser und wirksame Hebelarme 28, 30 bzw. Längen $l_1$ und $l_2$ der Ventilelemente 24, 26 so aufeinander abgestimmt sind, dass der Fluidgegendruck ausreichend ist, um die Ventilwaage zu öffnen. Das ist beispielsweise dann der Fall, wenn man bei symmetrischer Ventilwaage mit gleichen Längen der Hebelarme 28, 30 und gleichen Ventilelementdurchmessern, den Wirkdurchmesser beispielsweise des ersten Ventilelementes 24, 26 entsprechend vergrößert. Diesem konstruktiven Variabilitätsvorteil steht der Nachteil des Auftretens von Wellenmomenten aus den Fluiddruckkräften gegenüber. Alle Varianten der Ventilwaage erfordern für ihre Effektivität eine gezielte Abstimmung der Anströmverhältnisse an den Ventilelementen 24, 26 und den sich daraus ergebenden Wellenmomenten mit den wirksamen Hebelarmen der beiden Ventilelementen 24, 26. Im Falle eines Wastegate-Ventils erzielt man dadurch über einen breiten Arbeitsbereich des Motors eine optimale innere Kompensation der Anregungen aus Abgasdruckpulsationen.

**Patentansprüche**

1. Fluidleitung (12) einer Brennkraftmaschine, mit einem Ventil (100; 200; 300; 400) zum Einstellen eines Fluidmassenstromes in der Fluidleitung (12), mit mindestens einer ersten Strömungsöffnung (16) mit einem ersten Ventilsitz (20) und mit mindestens einem mit dem ersten Ventilsitz (20) zusammenwirkenden ersten Ventilelement (24), so dass das erste Ventilelement (24) die erste Strömungsöffnung (16) wahlweise mit variablem Strömungsquerschnitt öffnet oder fluiddicht verschließt, sowie mit mindestens einer zweiten Strömungsöffnung (18) mit einem zweiten Ventilsitz (22) und mit mindestens einem mit dem zweiten Ventilsitz (22) zusammenwirkenden zweiten Ventilelement (26), so dass das zweite Ventilelement (26) die zweite Strömungsöffnung (18) wahlweise mit variablem Strömungsquerschnitt öffnet oder fluiddicht verschließt, wobei der erste Ventilsitz (20) an einem bezüglich eines Fluidmassenstromes (14) durch die Fluidleitung (12) stromabseitigen Ende der ersten Strömungsöffnung (16) und der zweite Ventilsitz (22) an einem bezüglich des Fluidmassenstromes (14) durch die Fluidleitung (12) stromaufseitigen Ende der zweiten Strömungsöffnung (18) ausgebildet ist und das Ventil.(10) einen um eine Schwenkachse (32) verschwenkbaren Hebel mit mindestens einem ersten Hebelarm (28) und mindestens einem zweiten Hebelarm (30), die an der Schwenkachse (32) miteinander starr verbunden sind, aufweist, wobei das erste Ventilelement (24) an dem ersten Hebelarm (28) um eine vorbestimmte erste Länge ($l_1$) beabstandet von der Schwenkachse (32) und das zweite Ventilelement (26) an dem zweiten Hebelarm (30) um eine vorbestimmte zweite Länge ($l_2$) beabstandet von der Schwenkachse (32) derart angeordnet sind, dass ein Verschwenken des Hebels um die Schwenkachse (32) in eine erste Richtung beide Ventilelemente (24, 26) von deren jeweiligen Ventilsitz (20, 22) weg bewegt und ein Verschwenken in eine entgegengesetzte zweite Richtung beide Ventilelemente (24, 26) zu deren jeweiligen Ventilsitz (20, 22) hin bewegt, **dadurch gekennzeichnet, dass** das erste und/oder zweite Ventilelement (24, 26) über jeweils ein federelastisches Element (34) mit dem jeweiligen Hebelarm (38, 30) verbunden ist, wobei das federelastische Element (34) derart angeordnet und ausgebildet ist, dass es eine Kraft auf das jeweilige Ventilelement (24, 26) in Schließrichtung bezogen auf das Verschließen der jeweiligen Strömungsöffnung (16, 18) durch Zusammenwirken von Ventilelement (24, 26) und Ventilsitz (20, 22) ausübt.

2. Fluidleitung (12) einer Brennkraftmaschine, mit einem Ventil (100; 300; 400) nach Anspruch 1, **dadurch gekennzeichnet, dass** die vorbestimmte erste Länge ($l_1$) gleich der vorbestimmten zweiten Länge ($l_2$) ist und dass eine von dem Fluidmassenstrom beaufschlagte .Fläche des ersten Ventilelementes (24) gleich einer von dem Fluidmassenstrom beaufschlagte Fläche des zweiten Ventilelementes (26) ist.

3. Fluidleitung (12) einer Brennkraftmaschine, mit einem Ventil (100; 200; 300; 400) nach mindestens einem der vorhergehenden Ansprüche, **dadurch gekennzeichnet, dass** ein Verhältnis zwischen der vorbestimmten ersten und zweiten Länge ($l_1$, $l_2$) sowie ein Verhältnis zwischen einer von dem Fluidmassenstrom beaufschlagten Fläche jeweils des ersten und zweiten Ventilelementes (24, 26) derart ausgebildet ist, dass sich die von den auf die Ventilelemente wirkenden Fluidmassenstromdruckkräften über die den Ventilelementen jeweils zugeordneten Hebel übertragenen Momente an der Schwenkachse (32) im Wesentlichen gegenseitig aufheben.

4. Fluidleitung (12) einer Brennkraftmaschine, mit einem Ventil (100; 200) nach mindestens einem der vorhergehenden Ansprüche, **dadurch gekennzeichnet, dass** die Hebelarme (28, 30) parallel oder zueinander abgewinkelt angeordnet sind.

5. Fluidleitung (12) einer Brennkraftmaschine, mit einem Ventil (400) nach mindestens einem der vorhergehenden Ansprüche, **dadurch gekennzeichnet, dass** mindestens einer der Hebelarme (28, 30) gekröpft ausgebildet ist.

6. Fluidleitung (12) einer Brennkraftmaschine, mit einem Ventil (100; 200; 300; 400) nach mindestens einem der vorhergehenden Ansprüche, **dadurch gekennzeichnet, dass** das erste und/oder zweite Ventilelement (24, 26) als Ventilklappe oder Ventilteller ausgebildet ist.

7. Fluidleitung (12) einer Brennkraftmaschine, mit einem Ventil (100; 200; 300; 400) nach mindestens einem der vorhergehenden Ansprüche, **dadurch gekennzeichnet, dass** an der Schwenkachse eine federelastische Vorrichtung derart angeordnet und ausgebildet ist, dass diese federelastische Vorrichtung eine federelastische Vorspannkraft auf die Schwenkachse (32) in die zweite Richtung des Verschwenkens des Hebels um die Schwenkachse (32) ausübt.

8. Fluidleitung (12) einer Brennkraftmaschine, mit einem Ventil (100; 200; 300; 400) nach mindestens einem der vorhergehenden Ansprüche, **dadurch gekennzeichnet, dass** an der Schwenkachse (32) ein Aktor (42), insbesondere ein elektrischer oder pneumatischer Aktor, angeordnet ist, der die Schwenkachse (32) derart bewegt, dass der Hebel um die Schwenkachse (32) verschwehkt.

9. Brennkraftmaschine,
**gekennzeichnet durch** eine Fluidleitung (12) gemäß einem der vorhergehenden Ansprüche.

10. Brennkraftmaschine gemäß Anspruch 9,
**dadurch gekennzeichnet, dass** die Fluidleitung (12) ein Teil des Abgasleitungssystems ist.

11. Brennkraftmaschine gemäß Anspruch 10,
**dadurch gekennzeichnet, dass** die Brennkraftmaschine eine aufladbare Brennkraftmaschine ist und wenigstens eine Turbine mit einer Umgehungsleitung aufweist, in welcher das Ventil (100; 200,; 300; 400) zum wahlweisen Schließen und Öffnen der Umgehungsleitung angeordnet ist, wobei der Fluidmassenstrom ein Abgasmassenstrom ist.

12. Brennkraftmaschine gemäß Anspruch 9,
**dadurch gekennzeichnet, dass** die Fluidleitung (12) ein Teil einer Abgasrückführungsleitung ist.

**Claims**

1. Fluid line (12) of an internal combustion engine, having a valve (100; 200; 300; 400) for adjusting a fluid mass flow in the fluid line (12), having at least one first flow opening (16) with a first valve seat (20) and with at least one first valve element (24), which interacts with the first valve seat (20), such that the first valve element (24) selectively opens the first flow opening (16) with variable flow cross section or closes said first flow opening in fluid-tight fashion, and having at least one second flow opening (18) with a second valve seat (22) and with at least one second valve element (26) which interacts with the second valve seat (22), such that the second valve element (26) selectively opens the second flow opening (18) with variable flow cross section or closes said second flow opening in fluid-tight fashion, wherein the first valve seat (20) is formed on a downstream end of the first flow opening (16) with respect to a fluid mass flow (14) through the fluid line (12) and the second valve seat (22) is formed on an upstream end of the second flow opening (18) with respect to the fluid mass flow (14) through the fluid line (12), and the valve (10) has a lever which is pivotable about a pivot axle (32) and which has at least one first lever arm (28) and at least one second lever arm (30) which are rigidly connected to one another at the pivot axle (32), wherein the first valve element (24) is arranged on the first lever arm (28) so as to be spaced apart from the pivot axle (32) by a predetermined first length ($l_1$) and the second valve element (26) is arranged on the second lever arm (30) as to be spaced apart from the pivot axle (32) by a predetermined second length ($l_2$), in such a way that a pivoting of the lever about the pivot axle (32) in a first direction moves both valve elements (24, 26) away from their respective valve seat (20, 22) and a pivoting in an opposite, second direction moves both valve elements (24, 26) toward their respective valve seat (20, 22), **characterized in that** the first and/or second valve element (24, 26) is connected to the respective lever arm (38, 30) by way of in each case one resiliently elastic element (34), wherein the resiliently elastic element (34) is arranged and designed so as to exert a force on the respective valve element (24, 26) in a closing direction in relation to the closure of the respective flow opening (16, 18) as a result of interaction of valve element (24, 26) and valve seat (20, 22).

2.  Fluid line (12) of an internal combustion engine, having a valve (100; 300; 400) according to Claim 1, **characterized in that** the predetermined first length ($l_1$) is equal to the predetermined second length ($l_2$), and **in that** a surface area, acted on by the fluid mass flow, of the first valve element (24) is equal to a surface area, acted on by the fluid mass flow, of the second valve element (26).

3.  Fluid line (12) of an internal combustion engine, having a valve (100; 200; 300; 400) according to at least one of the preceding claims, **characterized in that** a ratio between the predetermined first and second lengths ($l_1$, $l_2$) and a ratio between a surface area, acted on by the fluid mass flow, of the first and second valve elements (24, 26) in each case are configured such that the moments transmitted at the pivot axle (32) via the levers respectively assigned to the valve elements by the fluid mass flow pressure forces acting on the valve elements substantially cancel one another out.

4.  Fluid line (12) of an internal combustion engine, having a valve (100; 200) according to at least one of the preceding claims, **characterized in that** the lever arms (28, 30) are arranged parallel or at an angle with respect to one another.

5.  Fluid line (12) of an internal combustion engine, having a valve (400) according to at least one of the preceding claims, **characterized in that** at least one of the lever arms (28, 30) is of cranked form.

6.  Fluid line (12) of an internal combustion engine, having a valve (100; 200; 300; 400) according to at least one of the preceding claims, **characterized in that** the first and/or second valve element (24, 26) is in the form of a valve flap or valve disc.

7.  Fluid line (12) of an internal combustion engine, having a valve (100; 200; 300; 400) according to at least one of the preceding claims, **characterized in that**, at the pivot axle, a resiliently elastic device is arranged and designed such that said resiliently elastic device exerts a resiliently elastic preload force on the pivot axle (32) in the second direction of the pivoting of the lever about the pivot axle (32).

8.  Fluid line (12) of an internal combustion engine, having a valve (100; 200; 300; 400) according to at least one of the preceding claims, **characterized in that** an actuator (42), in particular an electrical or pneumatic actuator, is arranged on the pivot axle (32), which actuator moves the pivot axle (32) such that the lever pivots about the pivot axle (32).

9.  Internal combustion engine,
    **characterized by** a fluid line (12) according to one of the preceding claims.

10. Internal combustion engine according to Claim 9,
    **characterized in that** the fluid line (12) is a part of the exhaust-gas line system.

11. Internal combustion engine according to Claim 10,
    **characterized in that** the internal combustion engine is a superchargeable internal combustion engine and has at least one turbine with a bypass line in which the valve (100; 200; 300; 400) is arranged for the purposes of selectively closing and opening the bypass line, wherein the fluid mass flow is an exhaust-gas mass flow.

**12.** Internal combustion engine according to Claim 9,
**characterized in that** the fluid line (12) is a part of an exhaust-gas recirculation line.


**Revendications**

**1.** Conduite de fluide (12) d'un moteur à combustion interne, avec une soupape (100; 200; 300; 400) pour le réglage d'un débit massique de fluide dans la conduite de fluide (12), avec au moins une première ouverture d'écoulement (16) avec un premier siège de soupape (20) et au moins un premier élément de soupape (24) coopérant avec le premier siège de soupape (20), de telle manière que le premier élément de soupape (24) au choix ouvre la première ouverture d'écoulement (16) avec une section transversale d'écoulement variable ou la ferme de façon étanche au fluide, ainsi qu'avec au moins une deuxième ouverture d'écoulement (18) avec un deuxième siège de soupape (22) et avec au moins un deuxième élément de soupape (26) coopérant avec le deuxième siège de soupape (22), de telle manière que le deuxième élément de soupape (26) au choix ouvre la deuxième ouverture d'écoulement (18) avec une section transversale d'écoulement variable ou la ferme de façon étanche au fluide, dans laquelle le premier siège de soupape (20) est formé sur une extrémité aval de la première ouverture d'écoulement (16) par rapport à un débit massique de fluide (14) à travers la conduite de fluide (12) et le deuxième siège de soupape (22) est formé sur une extrémité amont de la deuxième ouverture d'écoulement (18) par rapport au débit massique de fluide (14) à travers la conduite de fluide (12) et la soupape (10) présente un levier pivotant autour d'un axe de pivotement (32) avec au moins un premier bras de levier (28) et au moins un deuxième bras de levier (30), qui sont reliés rigidement l'un à l'autre à l'axe de pivotement (32), dans laquelle le premier élément de soupape (24) est disposé sur le premier bras de levier (28) en étant espacé de l'axe de pivotement (32) d'une première longueur prédéterminée ($l_1$) et le deuxième élément de soupape (26) est disposé sur le deuxième bras de levier (30) en étant espacé de l'axe de pivotement (32) d'une deuxième longueur prédéterminée ($l_2$), de telle manière qu'un pivotement du levier autour de l'axe de pivotement (32) dans une première direction écarte les deux éléments de soupape (24, 26) de leur siège de soupape respectif (20, 22) et qu'un pivotement dans une deuxième direction opposée déplace les deux éléments de soupape (24, 26) en direction de leur siège de soupape respectif (20, 22), **caractérisée en ce que** le premier et/ou le deuxième élément(s) de soupape (24, 26) est/sont respectivement relié(s) au bras de levier respectif (38, 30) par un élément de ressort élastique (34), dans lequel l'élément de ressort élastique (34) est disposé de telle manière qu'il exerce une force sur l'élément de soupape respectif (24, 26) dans la direction de fermeture par rapport à la fermeture de l'ouverture d'écoulement respective (16, 18) par la coopération de l'élément de soupape (24, 26) et du siège de soupape (20, 22).

**2.** Conduite de fluide (12) d'un moteur à combustion interne, avec une soupape (100; 300; 400) selon la revendication 1, **caractérisée en ce que** la première longueur prédéterminée ($l_1$) est égale à la deuxième longueur prédéterminée ($l_2$) et **en ce qu'**une face du premier élément de soupape (24) atteinte par le débit massique de fluide est égale à une face du deuxième élément de soupape (26) atteinte par le débit massique de fluide.

**3.** Conduite de fluide (12) d'un moteur à combustion interne, avec une soupape (100; 200; 300; 400) selon au moins une des revendications précédentes, **caractérisée en ce qu'**un rapport entre les deux longueurs prédéterminées ($l_1$, $l_2$) ainsi qu'un rapport entre une face atteinte par le débit massique de fluide respectivement du premier et du deuxième élément de soupape (24, 26) sont réalisés de telle manière que les forces de pression du débit massique de fluide agissant sur les éléments de soupape s'équilibrent pour l'essentiel mutuellement par les couples transmis par le levier respectivement associé aux éléments de soupape à l'axe de pivotement (32).

**4.** Conduite de fluide (12) d'un moteur à combustion interne, avec une soupape (100; 200) selon au moins une des revendications précédentes, **caractérisée en ce que** les bras de levier (28, 30) sont disposés parallèlement ou angulairement l'un par rapport à l'autre.

**5.** Conduite de fluide (12) d'un moteur à combustion interne, avec une soupape (400) selon au moins une des revendications précédentes, **caractérisée en ce qu'**au moins un des bras de levier (28, 30) est doublement coudé.

**6.** Conduite de fluide (12) d'un moteur à combustion interne, avec une soupape (100; 200; 300; 400) selon au moins une des revendications précédentes, **caractérisée en ce que** le premier et/ou le deuxième élément(s) de soupape (24, 26) est/sont réalisé(s) sous forme de clapet de soupape ou de plateau de soupape.

**7.** Conduite de fluide (12) d'un moteur à combustion interne, avec une soupape (100; 200; 300; 400) selon au moins une des revendications précédentes, **caractérisée en ce qu'**un dispositif de ressort élastique est disposé et configuré à l'axe de pivotement, de telle manière que ce dispositif de ressort élastique exerce une force de précontrainte élastique sur l'axe de pivotement (32) dans la deuxième direction de pivotement du levier autour de l'axe de pivotement (32).

8. Conduite de fluide (12) d'un moteur à combustion interne, avec une soupape (100; 200; 300; 400) selon au moins une des revendications précédentes, **caractérisée en ce qu'**un actionneur (42), en particulier un actionneur électrique ou pneumatique, est disposé sur l'axe de pivotement (32), et déplace l'axe de pivotement (32) de telle manière que le levier pivote autour de l'axe de pivotement (32).

9. Moteur à combustion interne, **caractérisé par** une conduite de fluide (12) selon l'une quelconque des revendications précédentes.

10. Moteur à combustion interne selon la revendication 9, **caractérisé en ce que** la conduite de fluide (12) est une partie d'un système de tuyau de gaz d'échappement.

11. Moteur à combustion interne selon la revendication 10, **caractérisé en ce que** le moteur à combustion interne est un moteur à combustion interne à suralimentation et présente au moins une turbine avec une conduite de dérivation, dans laquelle la soupape (100; 200; 300; 400) est disposée afin de fermer ou d'ouvrir au choix la conduite de dérivation, dans lequel le débit massique de fluide est un débit massique de gaz d'échappement.

12. Moteur à combustion interne selon la revendication 9, **caractérisé en ce que** la conduite de fluide (12) est une partie d'une conduite de recyclage des gaz d'échappement.

FIG. 1

FIG. 2

EP 2 749 761 B1

FIG. 3

FIG. 4

FIG. 5

EP 2 749 761 B1

FIG. 6

FIG. 7

FIG. 8

FIG. 9

EP 2 749 761 B1

FIG. 10

FIG. 11

FIG. 12

FIG. 13

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10347442 A1
- WO 2007138325 A2
- WO 2007002520 A1
- DE 1264190 B
- US 2003075159 A1